# EUROPEAN PATENT APPLICATION

(11) **EP 1 679 644 A1**
(43) Date of publication of application: **12.07.2006**
(21) Application number: 05000169.2
(22) Date of filing: 05.01.2005
(51) Int. Cl.: G06Q 10/00

(54) **Audio-visual electronic secretary device and method for the same**

(71) Applicant: Grand Advance Corp., Hsintien City, Taipei (TW)
(72) Inventor: Wu, Chao-Hung, Hsintien City Taipei (TW)
(74) Representative: Viering, Jentschura & Partner

(57) **Abstract**

An AV electronic secretary suite is used in a computer, performed as an electronic calendar providing with AV records kept on one's own. A video and audio capture device is incorporated as peripherals on a PC. Prompts for an appointment may be recorded at a specified time, automatic AV reminders are next shown at the specified time, and a frame of the AV reminders may be displayed on a PC monitor, or the AV reminders may be automatically transferred to a personal mobile device through a speech transfer device. The speech transfer device is connected to a telephone set for operation of the AV display, or the AV data may be transferred through the Internet as well.

## Description

### BACKGROUND OF THE INVENTION

### 1. Field of the Invention

This invention relates to an audio-visual (AV) electronic secretary software suite used in a computer and particularly to an electronic calendar with automatic reminder and AV recording functions.

### 2. Description of the prior art

With the widespread usage of computers, electronic PC calendar software is used by the majority for managing personal schedules, meetings, and appointments. All in all, not everyone has the assistance of a responsible secretary, and even if a high-rank executive of a company is qualified to hire a personal secretary to help deal with schedules, some matters are still ignored and mistakes are made. Further, those 24-hour secretary assistance is never available, and the executive must still manage his or her appointments after business hours.

In spite of general PC calendar software, such as Outlook, or a personal secretary, if the executive goes to other places on errands, the executive has to remember each day's schedules and meetings, where to meet with customers, and telephone numbers on his or her own. Therefore, the secretary actually helps the executive only during office hours but can do nothing after work on a holiday, or on a business trip. If the secretary is not very good or not particularly dedicated, then appointments with customers, important meetings, and schedules are not necessarily managed well.

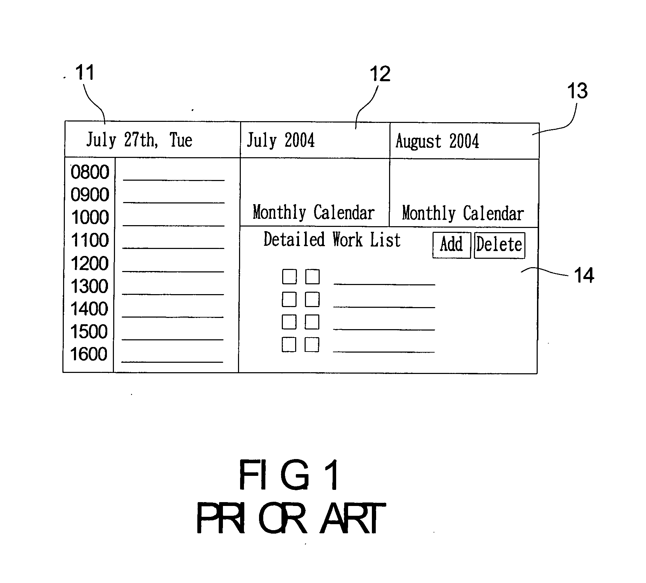

As shown in Fig. 1, for a general electronic calendar software, for example, when a PC is booted, a plurality of functional blocks appear, such as a today timetable 11, a monthly calendar 12 of this month, a monthly calendar 13 of next month, a detailed work list 14, in which a user may set today's schedule in the today timetable 11 by selecting a specified time and keying in engagement affairs and may also add reminders in a period of time or inquire about the day's schedule. The calendar 12 of this month may help the user easily select a date specified, inquire about a schedule on the specified day, or set a schedule. The monthly calendar 13 of next month shows in advance next month's dates and helps the user specify a date for scheduling. Further, all months may be selected in addition to the next month. The detailed work list 14 helps the user inquire about all schedules, appointments, and important items.

A conventional electronic calendar in Fig. 1 still functions through the conventional method typing in appointments and brief descriptions to shown on a screen as reminders. If the user leaves his or her computer and easily ignores some reminders, the calendar cannot be an efficient assistant.

In consideration of drawbacks of the conventional electronic secretary or human assistant, a personal computer, an AV equipment, and a speech transfer device connected to a telephone line are used cooperatively with a PC-based electronic secretary software. Furthermore, the AV electronic secretary suite is thus formed without less key inputted and only selective function used for managing and inquiring the schedule during operation. Since that, all users can have their own electronic secretary thereby.

### SUMMARY OF THE INVENTION

An Audio-Visual electronic secretary suite is used in a computer, and performed as an electronic calendar providing with AV records kept on one's own using a video and audio capture device as peripherals on a PC. Prompts for an appointment may be recorded at a specified time, automatic AV reminders are shown at the specified time, AV reminders may be displayed on a PC monitor, or AV reminders may be performed through a speech transfer device connected to a telephone set to a personal mobile device.

The AV electronic secretary device comprises the following elements. Electronic secretary software is installed on a computer system and a PC software integrated in AV peripherals of the computer system. A video capture device and an audio capture device are both connected to the computer system. A speech transfer device is connected to the computer system with wires or wireless. A telephone is connected to the speech transfer device or to a Public Switched Telephone Network (PSTN). Through integration of the electronic secretary software and the video and audio capture devices, an AV message is recorded so that an AV reminder is formed for schedule management.

Further, through integration of the electronic secretary software and the video and audio capture devices of the computer, this invention provides an AV reminder method comprising the following steps. The electronic secretary software is executed as a daemon or standalone in the computer system. An AV message recording time is selected, in which a recording program is launched after the time is selected in the software. The AV message is recorded through the recording program in the software. A reminder mode is set in the software. Reminder mode is determined in the software, which includes a plurality of reminder modes. The AV reminder is executed according to the reminder mode.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
Fig. 1 is a schematic view illustrating an electronic calendar software according to prior art;
Fig. 2 is a schematic view illustrating an AV electronic secretary device according to this invention and connected with peripherals;
Fig. 3A is a schematic drawing illustrating an electronic secretary software according to this invention;
Fig. 3B is a schematic drawing illustrating the electronic secretary software according to this invention;
Fig. 3C is a schematic drawing illustrating the electronic secretary software according to this invention;
Fig. 3D is a schematic drawing illustrating the electronic secretary software according to this invention;
Fig. 3E is a schematic drawing illustrating the electronic secretary software according to this invention;
Fig. 4 is a flow chart describing steps for remotely recording AV messages in a preferred embodiment of the AV electronic secretary according to this invention;
Fig. 5 is a flow chart illustrating steps of arranging schedules using the AV electronic secretary according to this invention, where AV messages are remotely recorded; and
Fig. 6 is a flow chart illustrating steps of arranging schedules by using the AV electronic secretary according to this invention.

### DETAILED DESCRIPTION OF THE INVENTION

For an AV electronic secretary device according to this invention and method for the same, an AV technology for a current PC is used together with proprietary AV electronic secretary software providing an electronic calendar with an automatic reminder function and keeping AV records on the AV device. Accordingly, the AV reminders is shown on a PC monitor through the PC connected to a telephone set via a speech transfer device (e.g. VoIP BOX) or being transferred to and shown on various mobile devices. Thereby, an innovative electronic secretary function with a PC-based voice self-reminder is introduced in the present invention.

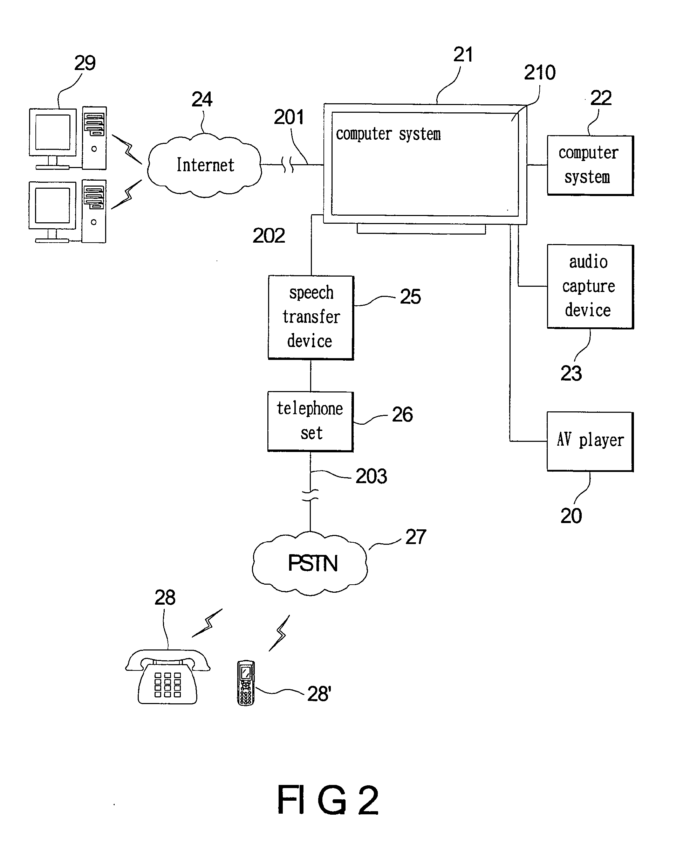

Fig. 2 is a schematic view illustrating an AV electronic secretary device according to this invention. The AV electronic secretary device is connected with peripherals. An electronic secretary software 210 must be installed on a computer system 21, and before or after installation, the electronic secretary software 210 may be integrated with AV peripherals connected to the computer system 21, in which a video capture device 22, an audio capture device 23, and an AV player 20 are provided in the figure. The video capture device 22 is, for example, a webcam generally used for networked video or any kind of digital video camera (DV, D8, and V8) and the like. The audio capture device 23 may be a microphone or voice capture equipment built into the video capture device 22. The AV player 20 is, for example, a monitor and speaker.

The computer system 21 is connected to the Internet 24 through a first connection line 21, so the electronic secretary software 210 may achieve telecommunication in each mode through Internet 24. The first connection line 201 may be wire or wirelessly connected to the Internet, and a computer 29 at the other terminal may send AV messages through the Internet 24 and even may be connected to the local computer system 21 through the electronic secretary software 210 in each PC 29 for achievement of schedule management by way of remote AV reminders. The computer system 21 is connected to a speech transfer device 25 (e.g. VoIP BOX) through a second connection line 202, and the line may be wire (such as USB, IEEE1394, parallel port, serial port, etc.) or wirelessly connected (such as Bluetooth, IrDA, WLAN, etc.). The digital AV signals compressed by and sent from the PC are delivered from a telephone set 26 through a third connection line 203 to Public Switched Telephone Network (PSTN) 27 and further to a general telephone 28 or a mobile telephone 28' or the like as a mobile telecommunication device for the purpose of an AV reminder. Moreover, the remote immobile or mobile telecommunication device may send the AV messages through PSTN 27 for achievement of schedule management by way of remote AV reminders.

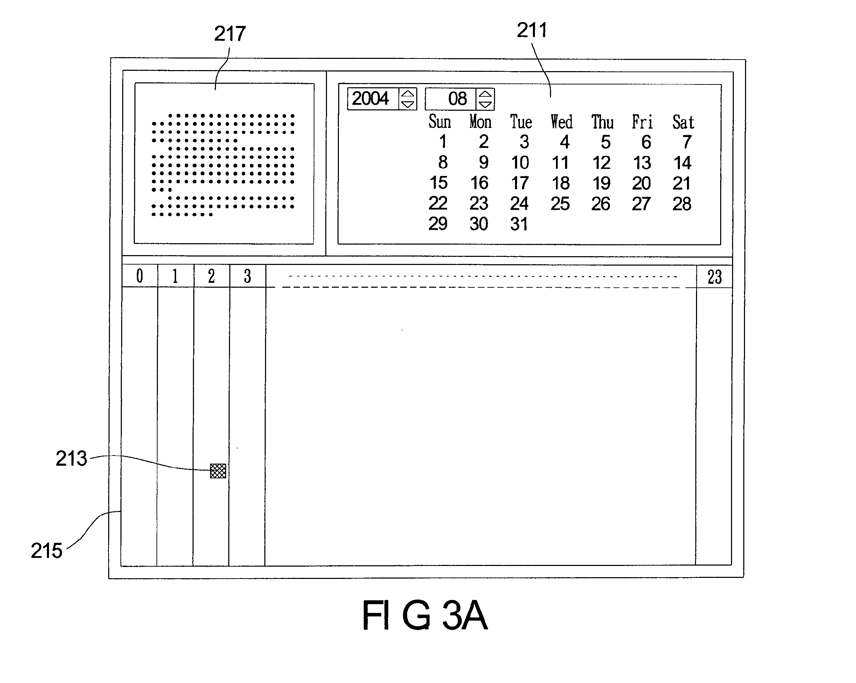

Fig. 3A is a schematic drawing illustrating the electronic secretary software according to this invention, in which at least each day's timetable 215 is provided, such as 0:00 am to 23:00 pm. Detailed times may be set at the time of schedule setting. A user may specify each day's specific time to arrange an AV appointment. A calendar may provide a monthly calendar 211 of this month and a monthly calendar of next month for the user to select easily a date. When the user selects a date, the timetable 215 shows the day's timetable in a timely manner. A remark area 217 is also provided for the user to input points for attention or all remarks for each appointment. The areas shown formerly may be added or reduced upon an effective demand without limit to the statement herein. When the user creates an AV prompt for an appointment or meeting at a specified date or time, a reminder symbol is formed on the date or the time to remind the user of the appointment.

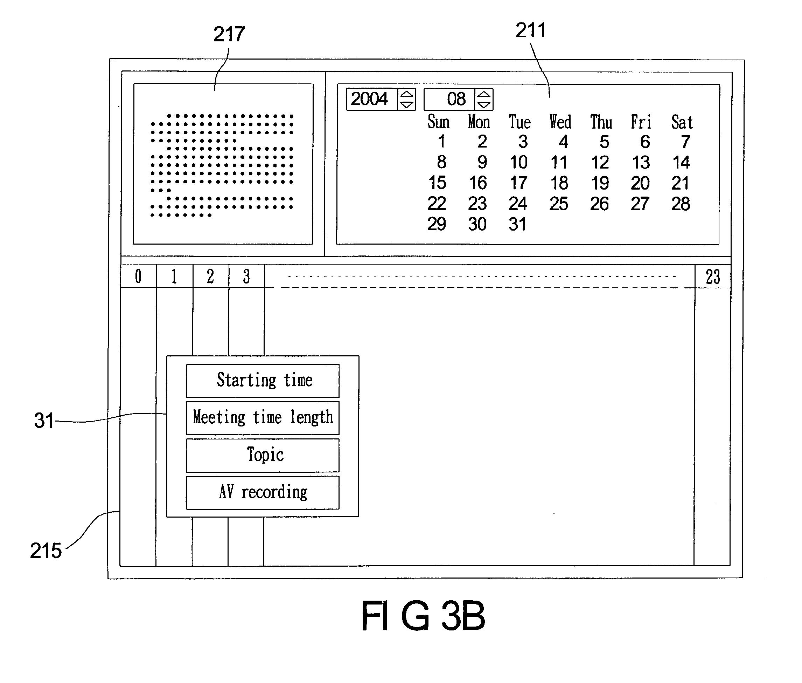

When an AV schedule is added, as shown in Fig. 3B for the electronic secretary software 210, a recording time setting window 31 is automatically launched at the selected time with the AV schedule to be added. Through the setting window 31, a starting time/date, a meeting time length, a topic, and an AV recording are as options for the AV schedule (such as an appointment, a meeting and the like) selected. All setting values are defaults and selection may be made using a mouse or other marking device for achievement of easy setting. Manual setting may also be available.

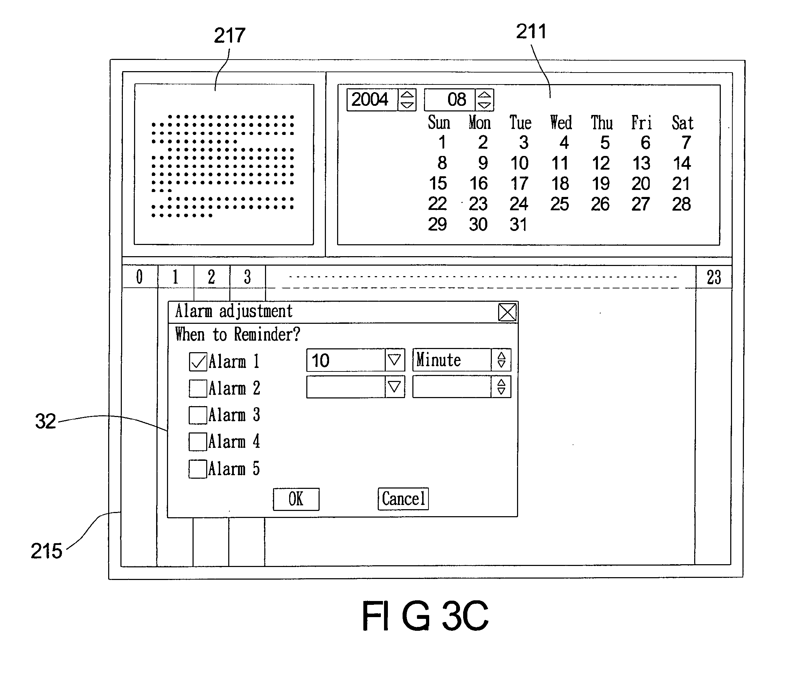

Fig. 3C is a schematic drawing illustrating the electronic secretary software according to this invention. After the AV schedule is set, a reminder mode of the AV schedule is set through an AV reminder setting window 32, in which the reminder may be appeared before a time length through the setting and one or more times of AV reminders are repeated. For example, the AV reminder will be executed in 30 minutes, 1 hour, or 2 hours before the appointment and also can be substituted as a default setting.

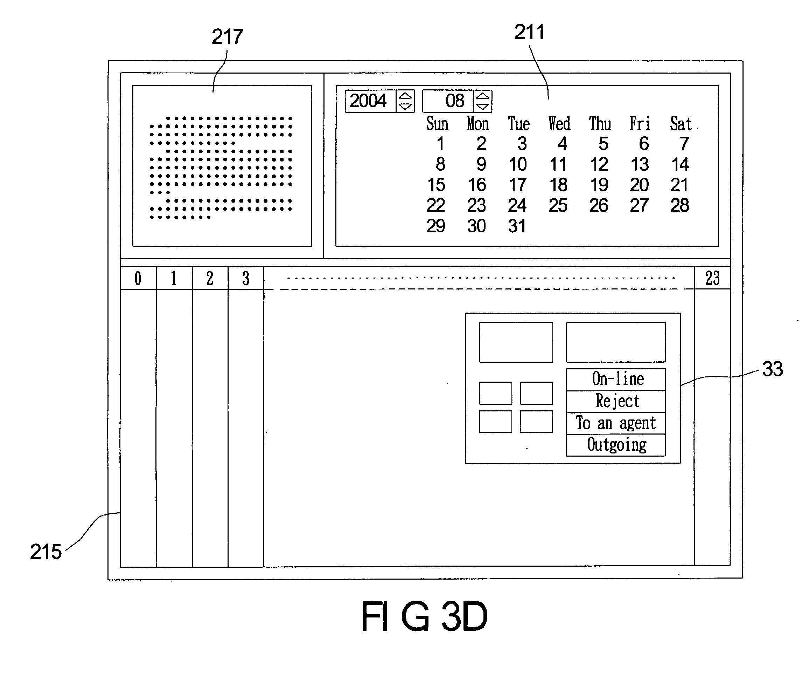

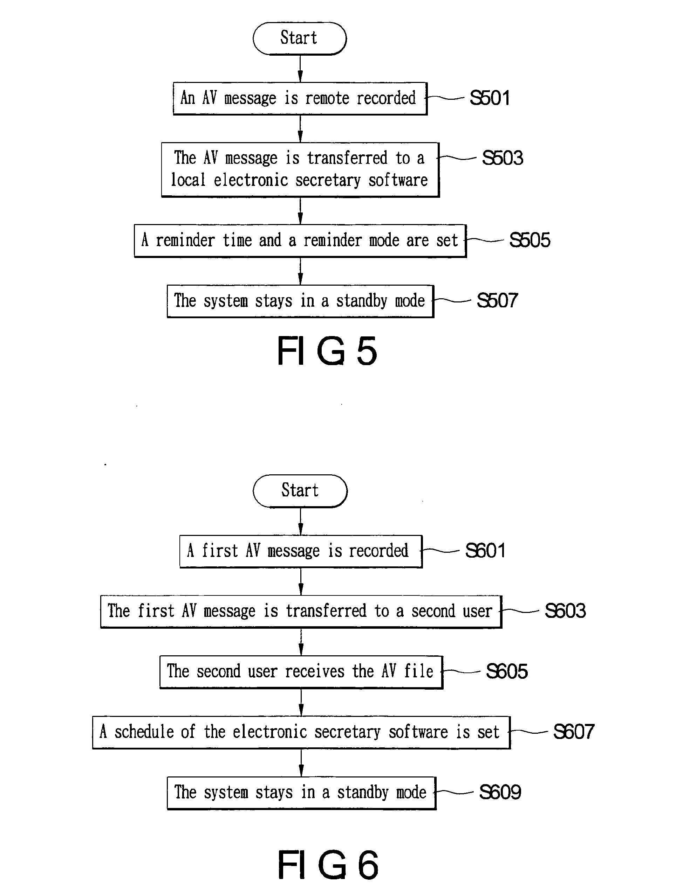

Fig. 3D is a schematic view illustrating a user condition setting window 33 provided in the electronic secretary software 210. The user may set a plurality of conditions thereof through the window 33, and, for example, at the time of on-line mode, an AV play window bounces on the PC monitor when the AV reminder is processed, as shown in Fig. 6. If a reject mode is set, the AV reminder is turned off when the time comes. If an answering agent mode is set, the reminder will be transferred to another person (such as a secretary, a friend, or the like) and the AV reminder is executed in the person's electronic secretary software 210. Conversely, if an outgoing mode is set, the AV reminder created will be transferred to the user's mobile phone, PDA, or other portable device through a video transfer device.

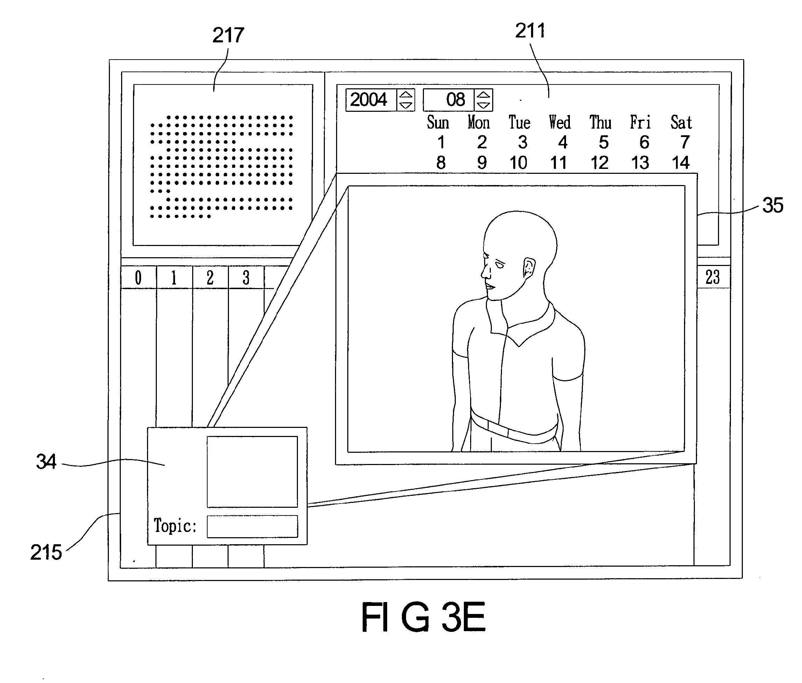

Fig. 3E is a schematic view illustrating the AV playback in the electronic secretary software. When the user wants to execute an AV recording at a specified time, an AV window 34 is generated after clicking an AV recording instruction, in which an AV recording contents required, such as topic, recording time, or defaults, the recording is processed or be previewed afterward through the AV recording/play window 35 created therein.

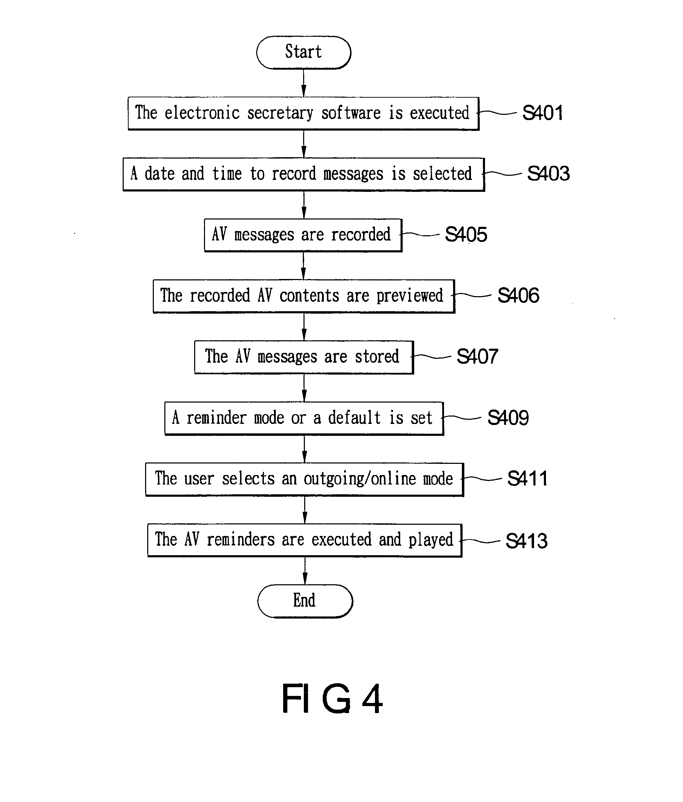

Fig. 4 is a flow chart of a preferred embodiment of a method for the AV electronic secretary according to this invention. The contents in the AV calendar are recorded through the peripherals connected to the computer system, and further the plurality of reminder modes is achieved through the reminder functions thereof. Steps thereof to be executed are as follows.

In the beginning, proprietary AV secretary software of the present invention is installed in advance in the computer system. More, the video capture device and the audio capture device respectively connected to the computer system and with a telecommunication network. In step S401, after integration of an initial environment, the electronic secretary software is executed in the computer system. After the computer system is started, the electronic secretary software is executed as a daemon or standalone in the computer system is available, and after execution, the AV peripherals may be enabled immediately and be set in standby mode. In step S403, a date and time to record messages, such as year, month, and date, is selected on the calendar in the electronic secretary software, and then the recording program is launched. In step S405, AV messages are recorded through the recording program of the calendar, in which a AV file is recorded dynamically by the video capture device and an audio file is recorded by the audio capture device as well. Important events and minutes can be recorded at will. In step S406, the recorded AV contents are previewed through a preview function to determine whether the contents will be accepted, deleted, canceled, or recorded again. In step S407, after the AV contents are determined, the AV message is stored in a memory of the computer system, and an indicating reminder symbol is formed on the specified date of the electronic secretary software so that the AV message may be reviewed by clicking the symbol. In step S409, the AV message of the calendar is recorded, and a reminder mode thereof may be set. If the mode is not set, a default may be selected. The AV messages is displayed on the monitor by the specified time, such as 30 minutes or one hour earilier, in advance or transferred and displayed on the mobile phone. The reminders are kept through e-mail as a networked telecommunication mode, the reminders are transferred to a personal secretary's telephone, and the reminders are shown repeatedly through setting. According to the other embodiment of this invention, the AV messages may be transferred elsewhere; for example, the AV reminders is executed in another computer or transferred to remind other's schedule. In step S411, after the setting is finished, the system enters the standby mode of events of the calendar and then the user may select the outgoing mode, the reject mode, the answering agent mode, or the on-line mode by himself, then the electronic secretary software determines which reminder mode was selected simultaneously. For example, if the user determines to stay in the outgoing mode, which indicates that the user may not use the computer or leave that place, then the reminders are transferred by a telephone system using the speech transfer device connected to the computer system to a mobile device. In step S413, when the time set for the reminders comes, the AV reminders are executed and played on the PC monitor or the mobile device, or the AV reminders are given through e-mail or other Internet telecommunication ways. Later, when receiving the AV reminders, the user may give a signal for confirmation to prevent repeated reminders or may delete the reminders or reply to the reminders.

After the process of the reminder is finished, the steps are ended and ready for the next AV reminder.

From steps S403 to S411 for AV recording, in the embodiments of this invention, through a PC-based AV setting time input, the user may quickly set an input for AV recording using his own PC and even may execute a remote AV electronic secretary setting using a PC at another terminal connected with Internet through video software. A process thereof is illustrated in Fig. 5. In the beginning, an initial environment mentioned above is integrated. In step S501, a message recording time is selected from a remote computer system or various portable devices, such as a mobile phone, a PDA, a notebook and the like, and then the AV message recording is executed. In step S503, AV messages are transferred through wired or wireless Internet to the electronic secretary software installed in a local computer system, and then a schedule reminder symbol is formed at a specified time. In step S505, a reminder time and a reminder mode are set to complete the steps of remote setting. In step S507, in standby mode, AV reminders are executed when the specified time comes.

According to the embodiment of this invention, the AV messages recorded from the remote mobile phone are transferred to the local computer system, thereby the schedule setting is completed. In another embodiment, speech sounds are transferred by a mobile phone or a common telephone through the speech transfer device to the local computer system for completion of the speech recording. The schedule setting of the remote AV electronic secretary is thus achieved.

The AV electronic secretary according to this invention and method for the same is not only used for a single user's schedule setting but also used to transfer the recorded AV messages to a second user for schedule setting. A flow chart in Fig. 6 illustrates steps of arranging a schedule through the AV electronic secretary according to this invention.

In the beginning, an initial environment is integrated. In step S601, a first user records AV messages through the remote computer system, various portable devices, or the local device. In step S603, the AV messages are transferred through wired or wireless connection with Internet to remind a second user about the schedules. In step S605, when receiving the AV messages, a second user stores the messages in the electronic secretary software according to a specified time setting thereinto. In step S607, according to the setting or a schedule set by the second user through the electronic secretary software, a schedule reminder symbol is formed at the specified time. In step S609, after a reminder time and a reminder mode thereof are set, the second user's computer system enters standby mode, engagement mode of schedules of the first user and the second user. According to this invention, the proprietary AV software is linked with the computer, the telephone, and the speech transfer device. A brand-new remote voice calling system for management is thus formed after integration of the software and the hardware. The system breaks a rule that pure software in a PC is used for query only and breaks through a time limit; namely, this invention pushes the PC-based voice calling to work for 24 hours. This system further works with the originally developed AV input, off-hook, and query functions better than a traditional query by way of input of characters, so that close humanization and time-saving query, calling, and answering are achieved, and all contents and detailed special notes of the schedule may be completely expressed without being ignored.

Further, this invention provides only an input of all schedules to the computer, so no one will be required hereafter to remember what he or she input or be required to search for reminders. The computer will remind the user in advance and call the user for the reminders when the time comes. Thus, regardless of a secretary, all of the schedules are fully handled well by this system.

To sum up, the AV electronic secretary device according to this invention and method for the same incorporates as an electronic calendar providing AV records kept on one's own using a video and audio capture device coupled with a PC for achieving the AV schedule management.

However, in the description mentioned above, only the preferred embodiments according to this invention are provided without limit to claims of this invention; all those skilled in the art without exception should include the equivalent changes and modifications as falling within the true scope and spirit of the present invention.

### Reference numeral

- 11: today timetable
- 12: monthly calendar of this month
- 13: monthly calendar of next month
- 14: detailed work list
- 21: computer system
- 20: AV player
- 210: electronic secretary software
- 22: video capture device
- 23: audio capture device
- 24: Internet
- 25: speech transfer device
- 26: telephone set
- 27: Public Switched Telephone Network (PSTN)
- 28: general telephone
- 28': mobile phone
- 29: computer
- 201: first connection line
- 202: second connection line
- 203: third connection line
- 211: monthly calendar of this month
- 213: indicating reminder symbol
- 215: timetable
- 217: remark area
- 31: recording time setting window
- 32: AV reminder setting window
- 33: user condition setting window
- 34: AV window
- 35: AV recording/play window

A
   727 ⇄ July 27^{th}, Tue
   2004 7 July 2004
   2004 8 August 2004
   Monthly Calendar
   Detailed Work List
   Add
   Delete
   - 24: Internet
   - 21: computer system
   - 25: speech transfer device
   - 26: telephone set
   - 21: computer system
   - 23: audio capture device
   - 20: AV player
B
   Starting time
   Meeting time length
   Topic
   AV recording
C
   Alarm adjustment
   When to Reminder
   Minute
   Alarm 1
   Alarm 2
   Alarm 3
   Alarm 4
   Alarm 5
   OK
   Cancel
D
   On-line
   Reject
   To an agent
   Outgoing
E
   Topic
   Start
   - S401: the electronic secretary software is executed.
   - S403: a date and time to record messages is selected.
   - S405: AV messages are recorded.
   - S406: The recorded AV contents are previewed.
   - S407: The AV messages are stored.
   - S409: A reminder mode or a default is set.
   - S411: The user selects an outgoing/online mode.
   - S413: The AV reminders are executed and played.
   End
   Start
   - S501: An AV message is remote recorded.
   - S503: The AV message is transferred to a local electronic secretary software.
   - S505: A reminder time and a reminder mode are set.
   - S507: The system stays in a standby mode.
   Start
   - S601: A first AV message is recorded.
   - S603: The first AV message is transferred to a second user.
   - S605: The second user receives the AV file.
   - S607: A schedule of the electronic secretary software is set.
   - S609: The system stays in a standby mode.

## Claims

1. An audio-visual (AV) electronic secretary device, comprising:
an electronic secretary software functioning as an electronic calendar with automatic reminder and recording functions using an AV device and
installed in a computer system connected to Internet, the software is integrated with the AV device of the computer system;
a video capture device connected to the computer system;
an audio capture device connected to the computer system;
an AV player connected to the computer system;
a speech transfer device connected to the computer system with wired or wireless through a second connection line; and
a telephone device connected to the speech transfer device or to a public switched telephone network (PSTN);
wherein through integration of the electronic secretary software and the video and audio capture devices, an AV message is recorded so that an AV reminder is formed for achieving the AV schedule management.

2. The AV electronic secretary device according to claim 1, wherein the AV message recorded through the electronic secretary software is compressed by speech transfer device and then transferred from the telephone device.

3. The AV electronic secretary device according to claim 1, wherein the AV message is transferred to various mobile devices through PSTN.

4. A method for audio-visual electronic secretary is used to integrate with a video capture device and an audio capture device of a computer system by AV electronic secretary software providing an AV reminder, comprising steps:
executing the electronic secretary software as a daemon or standalone in the computer system;
selecting an AV message recording time, wherein a recording program is launched after a time is selected in the software;
recording an AV message through the recording program in the software;
setting a reminder mode in the software;
selecting one of a plurality of reminder modes included; and
executing the AV reminder according to the reminder mode.

5. The method of executing the AV electronic secretary according to claim 4, wherein the computer system is wired or wirelessly connected to Internet.

6. The method of executing the AV electronic secretary according to claim 4, wherein the AV message recorded through the electronic secretary software is compressed by a speech transfer device and then transferred via a telephone set.

7. The method of executing the AV electronic secretary according to claim 4, wherein the AV message is transferred to various mobile devices through PSTN.

8. The method of executing the AV electronic secretary according to claim 4, wherein after the step of AV message recording is executed, the AV message is stored and an indicating reminder symbol is formed on the specified date of the electronic secretary software.

9. The method of executing the AV electronic secretary according to claim 4, wherein the reminder mode comprises that the AV message is displayed on a PC monitor before a specified time.

10. The method of executing the AV electronic secretary according to claim 4, wherein the reminder mode comprises that the AV message is displayed on a mobile phone by dialing out before a specific time.

11. The method of executing the AV electronic secretary according to claim 4, wherein the reminder mode comprises that a reminder is transferred through a networked telecommunication before a specific time.

12. The method of executing the AV electronic secretary according to claim 4, wherein the reminder mode comprises that the AV message is transferred to other place before a specific time and the reminder being executed afterward.

13. The method of executing the AV electronic secretary according to claim 4, wherein after the step of AV reminder is executed, a signal for confirmation is given to prevent reminder repetition, or the AV message is deleted or replied to.

14. The method of executing the AV electronic secretary according to claim 4, wherein after the step of AV message recording is executed, a step of previewing the AV message is provided.

15. The method of executing the AV electronic secretary according to claim 4, wherein the AV message is remotely recorded and the AV electronic secretary setting is remotely controlled.

16. The method of executing the AV electronic secretary according to claim 15, wherein the remote recording device comprises a computer system and a portable device.

17. The method of executing the AV electronic secretary according to claim 15, wherein after the step of recording the AV message is executed through the electronic secretary software, the AV message is transferred to a second user for schedule arrangement.

18. The method of executing the AV electronic secretary according to claim 17, wherein the second user receives the AV message through wired or wireless connection.

19. The method of executing the AV electronic secretary according to claim 17, wherein the second user adds a schedule reminder symbol in the electronic secretary software at a specified time.
